# EUROPEAN PATENT APPLICATION

(11) **EP 4 672 529 A1**
(43) Date of publication of application: **31.12.2025**
(21) Application number: 24184035.4
(22) Date of filing: 24.06.2024
(51) Int. Cl.: H02H 3/087, H02H 7/26, H02H 3/07, H02J 1/14

(54) **PROTECTION COORDINATION METHOD FOR DC MICROGRIDS**

(71) Applicant: ABB SCHWEIZ AG, 5400 Baden (CH)
(72) Inventor: LAZAREVIC, Vladan, 5406 Baden-Rütihof, Aargau (CH); SCHWEIZER, Mario, 5406 Rütihof (CH); ABPLANALP, Markus Andreas, 5405 Baden-Dättwil (CH); CANALES, Francisco, 5405 Baden-Dättwil (CH)
(74) Representative: Maiwald GmbH

(57) **Abstract**

The invention relates to the field of DC microgrids, particularly to a method for protecting a DC microgrid (100) against a short circuit The DC microgrid (100) comprises at least one power electronic converter (310, 320, 330), a protection unit (410, 420, 430), which is configured for being in one of a through state, a CL state, or an open state. The DC microgrid (100) further comprises a bus-bar (500), connected to the output of the protection unit (410, 420, 430) and at least one sub-system (610 - 650) connected to the bus-bar (500), the sub-system (610 - 650) comprising a leaf-converter (614 - 654) and a diode (612 - 652). And it comprises at least one breaker (S11, S21, S31, S41) arranged upstream of the leaf-converter (614 - 654), and the diode (612 - 652) being arranged between the breaker (S11, S21, S31, S41) and the leaf-converter (614 - 654). The sub-systems (610 - 650) are hierarchically organized in at least one hierarchy level, the at least one hierarchy level being defined by a number of breakers (S11, S21, S31, S41) arranged between the protection unit (410, 420, 430) and the sub-system (610 - 650). The comprises the steps of:
setting the protection unit (410, 420, 430) into the through state, for delivering a regular voltage. When the protection unit (410, 420, 430) is in the through state and the measured voltage is higher than a first voltage and/or the measured current is lower than a first current, staying in the through state. When the protection unit (410, 420, 430) is in the through state and the measured voltage is lower than the first voltage and/or the measured current is higher than the first current, moving to a current-limited CL state for an on-timeslot (Tₒₙ) and, subsequently, for an off-timeslot (T_{off}), to the open state, in which no current is delivered. When the protection unit (410, 420, 430) is in the CL state and the breaker (S11, S21, S31, S41) senses a measured breaker current higher than a second current, tripping after a predefined number of cycles, the predefined number of cycles being a function of the hierarchy level of the breaker.

## Description

### Field of the Invention

The invention relates to the field of DC microgrids, particularly to a method for protecting the DC microgrid against a short circuit. The invention further relates to a protection unit, a power electronic converter, a breaker, a DC microgrid, a non-transitory computer-readable storage medium, and to a use.

### Background

DC microgrids turned out to be an appealing concept for many application cases, such as marine, commercial buildings and industrial plants, uninterruptible power supplies with DC outlet, and further application fields. However, a challenge is to protect the DC grids and their components against short-circuit faults. On the one hand, costly ultra-fast solid-state and fast hybrid circuit breakers are considered for a solution to quickly interrupt rather high di/dt short-circuit fault currents. On the other hand, communication-based coordination methods are typically employed to detect the fault location and actuate by opening the proper breaker, thus achieving selectivity. Hence, a robust protection against short-circuit faults would be desirable, preferably with low communication effort.

### Description

It is an objective of the disclosure to provide a method for protecting a DC microgrid against a short circuit fault. This objective is achieved by the subject-matter of the independent claims. Further embodiments are evident from the dependent claims and the following description.

One aspect relates to a method for protecting a DC microgrid against a short circuit according to claim 1.

A short circuit is an event in the DC microgrid that leads to a significantly increased current at an output of at least one AC/DC converter (or, possibly, of at least one DC/DC converter), which supports the DC microgrid. The short circuit may be caused anywhere in the grid. The DC microgrid may comprise one or more AC/DC converters and/or one or more DC/DC converters. For simplicity reasons, in the following the "AC/DC converters and/or DC/DC converters" are sometimes only called "converters". The power of a plurality of converters may be combined in a common bus-bar, so that the DC microgrid is supported from said bus-bar. Between the output of each converter and the bus-bar, a protection unit (PU) is arranged; this device is sometimes called "protection stage" (PS).

The DC microgrid is configured for providing one or more sub-systems with energy. Each sub-system comprises a "leaf-converter", i.e. a DC/DC or a DC/AC converter, which is the last converter in the DC microgrid - i.e. the "leaf' of the "(hierarchically organized) microgrid-tree" - before a load that is supplied with energy from this converter. Upstream of this converter, a (blocking) diode is arranged. This diode advantageously prevents a discharge of load input capacitor banks, which may be useful for maintaining the load hold-up time requirements. In an embodiment, MOSFETs may be used to emulate the diode's behaviour, e.g. to allow for energy recuperation (i.e., bidirectional current flow) in case of motor drive loads, but also to reduce the conduction losses incurred by the diode.

The protection unit is configured for measuring, at its output, a measured voltage and/or a measured current. The measuring may be performed continuously or "quasi-continuously", for instance every 10 µs. The protection unit may be a dedicated part of each source converter or a separate unit placed externally at the output of each source converter. The functionality provided by the protection unit may be a part of the converter feature in case of a fault current limiting power converters - e.g., buck, thyristor rectifier, DAB (Dual Active Bridge), and/or other isolated converters, etc. -, particularly if there are no concerns about the output filter capacitor discharge which is inherent to all purely converter-based protections.

The protection unit is configured for being in one of a through state, a CL state, or an open state. The protection unit may comprise a programmable logic unit and/or a processor unit, particularly for reading and/or processing the current and voltage measurements and for controlling the state accordingly.

The through state may be considered as the state, in which the protection unit normally operates. The through state may be an initial state of the protection unit, i.e. the state the protection unit is in after power-on and/or after a re-start or a similar event. In the through state, the protection unit just lets the power pass through, typically with low resistance. In other words, in the through state, the protection unit delivers a regular voltage and a regular current to the bus-bar. The regular voltage may be within a predefined voltage band. The regular current may be varied to some extend, but may be lower, in at least some cases significantly lower, than the current that can be measured when a short circuit fault occurs in the DC microgrid (or "grid"). For being able to differentiate between a "regular" situation in the grid and the "short circuit fault" situation, a "first voltage" and a "first current" may be defined. The predefined "first voltage" may be any voltage between the regular voltage and a voltage that is measured at a short circuit. The predefined "first current" may be any current between the regular current and a current that is measured at a short circuit. The predefined "first voltage" and a "first current" may depend on a concrete implementation and/or specification of the grid. As long as the measured voltage is higher than the first voltage and the measured current is lower than the first current, the protection unit stays in the through state.

The CL state - "CL" for "current-limited" - is a state, in which the protection unit limits the current delivered to the bus-bar. This current delivered to the bus-bar may be higher than the regular current. The current delivered in the CL state is only delivered for a small timeslot - the "on-timeslot" -, which may be selected in such a way, that no devices are harmed in the grid. The CL state is entered, coming from the through state, when a short circuit is indicated, i.e. when the measured voltage is lower than the first voltage and/or the measured current higher than the first current.

After the CL state, the protection unit moves to the open state. In the open state, no current is delivered. The open state is kept for an "off-timeslot". The off-timeslot may be equal or longer than the on-timeslot, for example two times longer, five times longer, ten times longer, and/or any ratio between. The duration of the on-timeslot and/or of the off-timeslot may depend on the breakers used in the grid. For instance, when fast mechanical breakers are used, which have a typical tripping delay of 3 ms, the on-timeslot may be 1 ms and the off-timeslot may be 4 ms, so that the tripping occurs within the off-timeslot. As a result, the tripping occurs at zero current. This may be very advantageous, because - due to this - quite inexpensive breakers can be used, which do not need means, like complex arc chambers, to deal with an arc when tripping. It should be noted that not every breaker should trip after reaching the CL state the first time, because the time when the breaker trips may depend on the breaker's position within the grid, particularly on its hierarchical position (see below).

After the open state, the protection unit moves to the through state. In the through state, the continuously performed measuring is done. When the short circuit fault is cleared - typically by the respective breaker having tripped -, the protection unit stays in the through state.

However, when the short circuit fault persists, the protection unit moves to the CL state for an on-timeslot and, then, to the open state for an off-timeslot, before moving to the through state again.

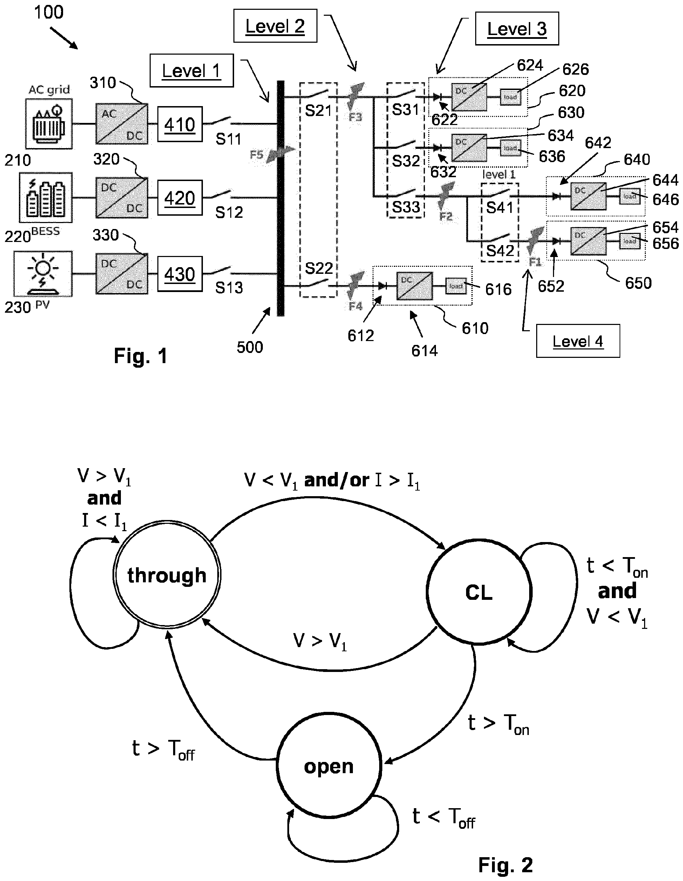

Each one of the breakers has a hierarchical position in the grid. The hierarchical position or the hierarchy level is defined by a number of breakers arranged between the protection unit and the sub-system. For instance, when a breaker is arranged immediately after the protection unit, this breaker is a level-1 breaker, and the sub-system behind this breaker is a level-1 sub-system. Consequently, a breaker that is arranged behind the level-1 breaker is a level-2 breaker, and so on. For the following considerations, a 4-level grid is assumed, as depicted in **Fig. 1**. However, it is easy to derive from these considerations grids with more levels or less levels, for example one level (for very simple grids), 2 levels, and possibly up to 9 levels or more; usually, the number of actual levels is limited by practicality considerations. It is an advantage of this system that it can be applied to a grid with a wide range of hierarchy levels.

A level-4 breaker, i.e. a breaker arranged at the lowest level of this exemplary grid, will trip as fast as possible, i.e. after having reached the CL state the first time. A level-3 breaker however, i.e. a breaker arranged at the second-lowest level of this exemplary grid, will not trip after having reached the CL state the first time, but after having reached the CL state a second time. This may be implemented by a counter that just counts up, when having reached the CL state the first time. When having reached the CL state the second time, the level-3 breaker trips. In other words, each breaker trips after a predefined number of cycles, wherein the predefined number of cycles is a function of the hierarchy level of the breaker. So that, when the DC microgrid - as an example - has a hierarchy level of 4, the breaker has following tripping characteristics: A level-4 breaker trips after one CL state, a level-3 breaker trips after two CL states, a level-2 breaker trips after three CL states, and a level-1 breaker trips after four CL states. To apply this to a grid with more or less levels than 4 is straightforward.

This method provides several advantages:
- Firstly, this method ensures proper coordination between source-side and downstream protection devices by applying a common timing scheme, which defines a current limitation period and zero current period.
- This method does not require any fault location detection algorithm; therefore, no additional sensors, auxiliary electronics, nor signal processing units are needed.
- This method ensures selectivity by proper coordination of different slow/fast breaker types (fast solid-state protection upstream, slow electro-mechanical protection downstream) by using current pulses as an information carrier between the protection devices.
- This method allows downstream breakers to open under zero-current condition, thus avoiding costly breakers with capability to interrupt fault currents with high energy and related complex arc chambers.
- Source side protection i.e. the protection unit - can be implemented as a solid-state circuit breaker (SSCB) with current limitation feature. Alternatively, the source protection can be involved as a protection output stage within each source converter.
- This method uses a local protection unit voltage measurement as the key indicator of a short circuit fault in the system. It serves as a trigger for protection units to jump from a normal "on"-state (the through state) to the "fault states". Output current can be used as an additional indicator or to trigger current limitation in other situations such as inrush current limitation or to provide black-start functionality.
- Due to the possibility of combining fast solid-state source-side protections, which interrupt the fault current, and simple electro-mechanical protection with a reduced energy dissipation capability that clear and isolate the fault, total cost of DC system protection can be significantly reduced.
- Since the current pulses provided by sources have a short pulse width, no cable overload is expected in case of short-circuit faults; therefore, no extra copper is needed to handle these faults properly.
- Furthermore, redundancy is inherent to this protection scheme, since the failed current interruption of level N breaker leads to an opening of a breaker of a higher level, upon the subsequent current pulse.

In some embodiments, when the protection unit is in the CL state and the measured voltage is higher than the first voltage (V1), the protection unit moves to the through state. This may accelerate the coming-back to regular grid-operation.

In an optional embodiment, a temperature sensor or a signal processing unit based on the breaker current measurement can be added to downstream breakers. This may advantageously initiate a breaker tripping in the case of long-term overload current (say, e.g., < 2 I₀), which may not be noticed by the source converters.

In some embodiments, the breakers are mechanical breakers. These breakers may be cheaper than other breaker types. They advantageously have a very low transition resistance. Preferably, mechanical breakers with reduced energy dissipation capability such as relays, segmented contactors, etc. may be used. Note that passive mechanical breakers relying on magnetic release trigger may not be used here.

In some embodiments, the breakers are solid state circuit breakers (SSCB). They advantageously have lower reaction times. Using SSCBs may result in lower timeslots for on-time and/or off-time.

An aspect relates to a protection unit, configured for performing at least a part of the method described above and/or below. The protection unit may comprise one or more programmable logic units and/or a processor units for supporting the performing of at least a part of said method.

An aspect relates to an AC/DC converter or a DC/DC converter comprising a protection unit as described above and/or below as an integral part.

An aspect relates to a breaker, configured for performing at least a part of the method described above and/or below.

In some embodiments, the breaker comprises a unit for setting the hierarchy level of the breaker. Said unit may be implemented as set of jumpers, a flash memory and/or EEPROM memory, etc. Said unit may compute its level from its function, e.g. from its maximum current. The breakers may comprise a programmable logic unit and/or a processor unit to handle the measured quantities and to actuate accordingly.

An aspect relates to a DC microgrid comprising at least one protection unit described above and/or below and at least one breaker described above and/or below.

An aspect relates to a non-transitory computer-readable storage medium having a program stored therein, which, when executed on a protection unit as described above and/or below, instructs the protection unit to perform at least a part of method described above and/or below.

An aspect relates to a use of a protection unit described above and/or below, a breaker described above and/or below and/or a DC microgrid described above and/or below for protecting the DC microgrid against a short circuit.

For further elucidation, the disclosure is described by means of embodiments shown in the figures. These embodiments are to be considered as examples only, but not as limiting.

### Brief Description of the Drawings

The drawings depict:
- **Fig. 1**: schematically a DC microgrid according to an embodiment;
- **Fig. 2**: an automaton describing a behaviour of a protection unit according to an embodiment;
- **Figs. 3a and 3b**: schematically a breaker's tripping scheme according to an embodiment;
- **Figs. 4a and 4b**: currents in a DC microgrid according to an embodiment.

### Detailed Description of Embodiments

**Fig. 1** shows schematically a DC microgrid 100 according to an embodiment. The DC microgrid 100 comprises sources, for instance an AC grid 210, a Battery Energy Storage System (BESS) 220, a photovoltaic (PV) device 230, and/or further types of sources. The sources 210, 220 and 230 are connected to converters 310, 320, 330 and followed by protection units 410, 420, 430. The outputs of the converters 310, 320, 330 are connected to an input of the corresponding protection unit 410, 420, or 430. The protection units 410, 420, 430 are each configured for being in one of a through state, a CL state, or an open state, as shown in **Fig. 2****.** The DC microgrid 100 further comprises a bus-bar 500, connected to the outputs of the protection units 410, 420, and 430.

The DC microgrid 100 provides energy for the sub-systems 610, 620, 630, 640 and 650. Each of the sub-systems comprises a DC/DC or a DC/AC converter ("leaf-converter") 614, 624, 634, 644 and 654. The converters 614, 624, 634, 644 and 654 are configured for supplying their respective load 616, 626, 636, 646 and 656 with energy. Upstream to each the converters 614, 624, 634, 644 and 654, a corresponding diode 612, 622, 632, 642 and 652 is arranged.

The hierarchically organized DC microgrid 100 and its hierarchy levels can be explained by looking at the breakers of the grid 100. For protecting the sub-systems 610, 620, 630, 640 and 650, breakers are arranged upstream to the respective sub-system. Level-2 sub-system 610 is protected by breaker S22. Level-3 sub-systems 620 and 630 are protected by level-3 breakers S31 and S32, respectively, and by level-2 breaker S21. Level-4 sub-systems 640 and 650 are protected by level-4 breakers S41 and S42, respectively, by level-3 breaker S33 and by level-2 breaker S21. The bus-bar 500 and all sub-systems 610 - 650 downstream the bus-bar 500 are protected by level-1 breakers S11, S12, and S13.

**Fig. 2** shows an automaton (Finite State Machine, FSM) describing a behaviour of a protection unit 410, 420, or 430 of a DC microgrid 100 according to the exemplary embodiment shown in **Fig. 1**. Each one of the protection units 410, 420, 430 is configured for measuring, at their outputs, a measured voltage and/or a measured current. After, e.g., a reset or a re-start, each one of the protection units 410, 420, 430 is set into a through state (marked with double ring). In the through state, each one of the protection units 410, 420, 430 is configured for delivering a regular voltage and a regular current to the bus-bar 500. As long as the measured voltage is higher than a first voltage and/or the measured current is lower than a first current, each one of the protection units 410, 420, 430 stays in the through state. When a short circuit fault occurs, the measured voltage becomes lower than the first voltage (V < V₁) and/or the measured current becomes higher than the first current (I > I₁). Caused by this, each protection unit moves to the CL state. In this CL state, a limited current is delivered, for an on-timeslot Tₒₙ. When the measured voltage is higher than the first voltage (V > V₁), the protection units' state may move to the through state again. Subsequently (for V < V₁), the protection units' state moves, for an off-timeslot T_{off}, to the open state. In the open state, no current is delivered. After the open state (i.e. t > T_{off}), the protection units move to the through state again. Note that advantageously no communication is needed between the protection units 410, 420, 430 for performing the method explained here.

When the protection unit 410, 420, 430 is the CL state and the breaker S11, S12, S13, S21, S22, S31, S32, S33, S41 or S42 senses a measured breaker current higher than a second current, the respective breaker trips after a predefined number of cycles. The predefined number of cycles is a function of the hierarchy level of the breaker. Hence, level-4 breakers S41 and S42 trip after one cycle. Level-3 breakers S31, S32, S33 trip after two cycles. Level-2 breakers S21 and S22 trip after three cycles. Level-1 breakers S11, S12, and S13 trip after four (or more) cycles. The second current - which is effectively the breaker's tripping-initiating current - may depend on characteristics of the respective breaker and/or its position in the grid. For instance, breakers of a lower level (e.g. level-4 breakers) have a lower predefined second current for tripping than higher-level breakers (e.g. level-2 breakers).

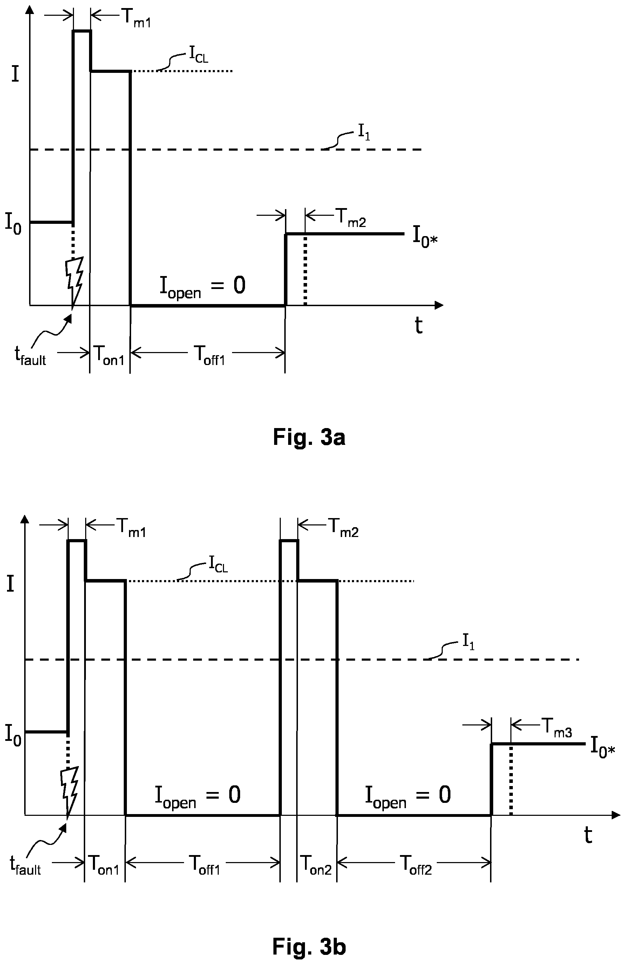

**Figs. 3a and 3b** show a schematic diagram of breaker's tripping scheme according to an embodiment. Neither the x-axis (time t) nor the y-axis (current I) is intended to be drawn to scale. **Fig. 3a** shows a tripping of a lowest-level breaker, e.g. a level-4 breaker in the exemplary DC microgrid 100 of **Fig. 1****.** The x-axis depicts a time t, the y-axis depicts a current I at a protection unit 410, 420, 430 of **Fig. 1****.** The scenario starts with a regular current I₀. At a time t_{fault}, a short circuit fault occurs, in a level-4 sub-system. This leads, for a quite short time tₘ₁, an increased current and reduced voltage. During time tₘ₁, each of the protection units 410, 420, 430 measures, at their respective outputs, that increased current, which is higher than a first current I₁. Additionally or as an alternative, a voltage may be measured, which is lower than the first voltage. As can be seen in **Fig. 2**, the protection units 410, 420, 430 move, as a reaction, to the CL state. In the CL state, a current I_{CL} is delivered, for an on-timeslot Tₒₙ. The current I_{CL} may be higher than I₀, possibly higher than I₁. After Tₒₙ₁, the protection units 410, 420, 430 move, for an off-timeslot T_{off1}, to the open state, where no current (Iₒₚₑₙ = 0) is delivered. During T_{off1}, the level-4 breaker trips, thus disconnecting the respective sub-system. After T_{off1}, the protection units 410, 420, 430 move to the through state again. In the through state, during a measuring time tₘ₂, the current and/or the voltage are measured. Since, due to the tripping of the level-4 breaker, the current is again lower than the first current I₁ and the voltage higher than V₁, the protection units 410, 420, 430 stay in the through state and deliver a regular current I_{0*}. I_{0*} is usually lower than the regular current I₀ at starting time, because the sub-system behind (or "downstream") the having-tripped level-4 breaker no longer consumes power.

**Fig. 3b** shows a tripping of a breaker, which is one level higher, e.g. a level-3 breaker in the exemplary DC microgrid of **Fig. 1****.** The first cycle of the automaton of **Fig. 2** is the same as in **Fig. 3a**, i.e. Tₘ₁, Tₒₙ₁, and T_{off1} look the same as the respective timeslots in **Fig. 3a****.** The only difference is, that the level-3 breaker does not trip in the first off-timeslot T_{off1}. Hence, at Tₘ₂, an increased current, i.e. greater than I₁ and/or the voltage lower than V₁, is measured. Then, the level-3 breaker trips in T_{off2}, so that in the following through state, during a measuring time tₘ₂, the current is below I₁ again, and the voltage higher than V₁. Thus, the protection units 410, 420, 430 stay in the through state and deliver a regular current I_{0*}, which is lower than the regular current I₀ at starting time.

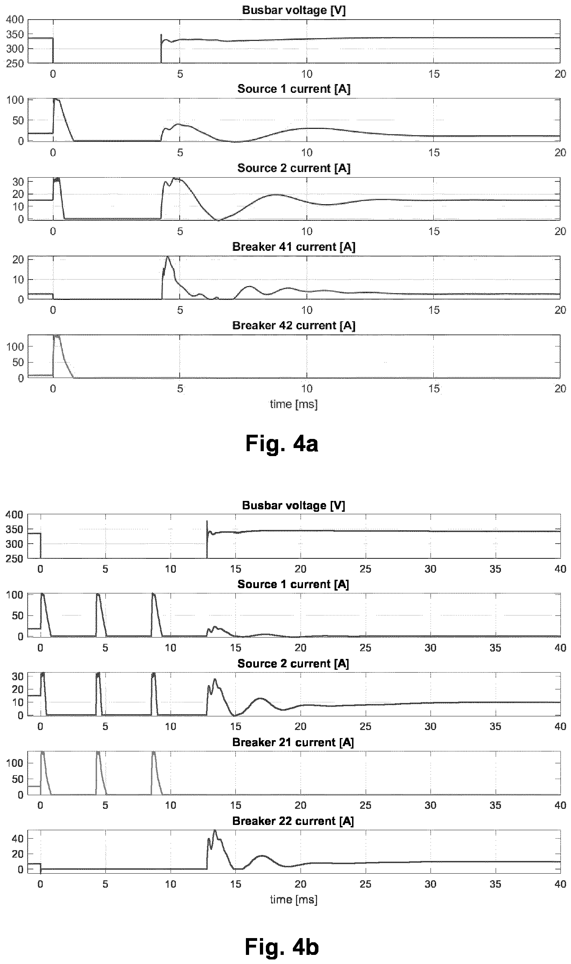

**Figs. 4a and 4b** show currents in a DC microgrid according to an embodiment. Only two sources "Source 1" and Source 2" are shown, which may be sources 210 and 220 in **Fig. 1****.** Regarding **Fig. 4a**, which shows currents for tripping of a level-4 breaker 42. As soon as the fault occurs (t = 0 is in **Figs. 3a and 3b**), the voltage at the bus-bar 500 (diagram "Busbar voltage") - and at the outputs of protection units 410, 420, 430 - drops quickly to a very low value due to the low fault impedance and limited current response of the source converters. After the first current pulse noticed by the breaker S42 - very shortly after t = 0, for a short time a high current occurs and, then, the breaker S42 trips and isolates the fault in sub-system 650. As an example, the mechanical breaker S42 opens about 3 ms after the trip is commanded. This tripping is not visible in **Fig. 4a**, because the breaker opens under zero-current condition. The protection units interrupt the current and brings it down to 0 (zero), e.g. after less than 1 ms. From that point in time, there is zero current in the microgrid. The mechanical breaker opens, e.g., about 3 ms after the trip is commanded. As a consequece, at the next "through" state at t = 4ms, the system can go back to normal operation since the fault has been cleared. It is, further, visible, that for a timeslot T_{off} all currents are Iₒₚₑₙ = 0. Once the fault is cleared (at t = 4 ms), the voltage at the bus-bar 500 is restored, and a new equilibrium is established, for instance delivering I_{0*} at the bus-bar 500. **Fig. 4b** shows the situation with a level-2 breaker 21. It can be seen, that Tₒₙ appears three times, before the breaker 21 trips and regular current I_{0*} is delivered again.

### List of Reference Symbols

- 100: DC microgrid
- 310, 320, 330: source converters
- 410, 420, 430: protection units
- 500: bus-bar
- 610 - 650: sub-systems
- 612 - 652: diodes
- 614 - 654: leaf-converters
- 616-656: loads
- S11, S12, S13: level-1 breakers
- S21, S22: level-2 breakers
- S31, S32, S33: level-3 breakers
- S41, S42: level-4 breakers

## Claims

1. A method for protecting a DC microgrid (100) against a short circuit, the DC microgrid (100) comprising:
at least one power electronic converter (310, 320, 330), an output of the power electronic converter (310, 320, 330) being connected to an input of a protection unit (410, 420, 430),
wherein the protection unit (410, 420, 430) is configured for being in one of a through state, a CL state, or an open state;
a bus-bar (500), connected to the output of the protection unit (410, 420, 430);
at least one sub-system (610 - 650) connected to the bus-bar (500), the sub-system (610 - 650) comprising a leaf-converter (614 - 654) and a diode (612 - 652); and
at least one breaker (S11, S21, S31, S41) arranged upstream of the leaf-converter (614 - 654), and the diode (612 - 652) being arranged between the breaker (S11, S21, S31, S41) and the leaf-converter (614 - 654),
wherein the sub-systems (610 - 650) are hierarchically organized in at least one hierarchy level, the at least one hierarchy level being defined by a number of breakers (S11, S21, S31, S41) arranged between the protection unit (410, 420, 430) and the sub-system (610 - 650);
the method comprising the steps of:
setting the protection unit (410, 420, 430) into the through state, the protection unit (410, 420, 430) being configured for delivering a regular voltage and a regular current to the bus-bar (500) in the through state;
measuring, at the output of the protection unit (410, 420, 430), a measured voltage and/or a measured current;
when the protection unit (410, 420, 430) is in the through state and the measured voltage is higher than a first voltage (V₁) and/or the measured current is lower than a first current (I₁), staying in the through state;
when the protection unit (410, 420, 430) is in the through state and the measured voltage is lower than the first voltage (V₁) and/or the measured current is higher than the first current (I₁),
moving to the CL state, the protection unit (410, 420, 430) being configured for delivering for an on-timeslot (Tₒₙ) a limited current in the CL state,
subsequently moving, for an off-timeslot (T_{off}), to the open state, in which no current is delivered, and
subsequently moving to the through state; and
when the protection unit (410, 420, 430) is in the CL state and the breaker (S11, S21, S31, S41) senses a measured breaker current higher than a second current, tripping after a predefined number of cycles, the predefined number of cycles being a function of the hierarchy level of the breaker.

2. The method of claim 1, further comprising the step of:
when the protection unit (410, 420, 430) is in the CL state and the measured voltage is higher than the first voltage (V₁), moving to the through state.

3. The method of any one of the preceding claims,
wherein, when the DC microgrid (100) has a hierarchy level of 4, the breaker (S11, S21, S31, S41) has following tripping characteristics:
a level-4 breaker (S41) trips after one CL state,
a level-3 breaker (S31) trips after two CL states,
a level-2 breaker (S21) trips after three CL states, and
a level-1 breaker (S11) trips after four CL states.

4. The method of any one of the preceding claims,
wherein a ratio between the on-timeslot (Tₒₙ) and the off-timeslot (T_{off}) is 10 % to 50 %, particularly 20 %, and/or
a duration of the off-timeslot (T_{off}) is between 0.5 ms and 5 ms, particularly 3 ms.

5. The method of any one of the preceding claims,
the breaker (S11, S21, S31, S41) further comprising a temperature sensor.

6. The method of any one of the preceding claims,
wherein the breakers (S11, S21, S31, S41) are mechanical breakers, and/or the breakers (S11, S21, S31, S41) are solid state circuit breakers.

7. A protection unit (410, 420, 430), configured for performing at least a part of the claims 1 - 6.

8. A power electronic converter (310, 320, 330) comprising a protection unit (410, 420, 430) according to claim 7 as an integral part.

9. A breaker (S11, S21, S31, S41), configured for performing at least a part of the claims 1-6.

10. The breaker (S11, S21, S31, S41) of claim 9, comprising a unit for setting the hierarchy level of the breaker.

11. A DC microgrid (100) comprising at least one protection unit (410, 420, 430) according to claim 7 and at least one breaker (S11, S21, S31, S41) according to claim 9.

12. A non-transitory computer-readable storage medium having a program stored therein, which, when executed on a protection unit (410, 420, 430) according to claim 7, instructs the protection unit (410, 420, 430) to perform at least a part of the claims 1-6.

13. Use of a protection unit (410, 420, 430) according to claim 7, a breaker (S11, S21, S31, S41) according to claim 9 and/or a DC microgrid (100) according to claim 11 for protecting the DC microgrid (100) against a short circuit.
